Europäisches Patentamt

European Patent Office

Office européen des brevets

(11) Publication number: **0 382 179**
**A2**

# EUROPEAN PATENT APPLICATION

(21) Application number: **90102387.9**

(22) Date of filing: **07.02.90**

(51) Int. Cl.⁵: **F16K 31/365, F16K 37/00**

(30) Priority: **10.02.89 IT 8491389**

(43) Date of publication of application:
**16.08.90 Bulletin 90/33**

(84) Designated Contracting States:
**AT BE CH DE ES FR GR IT LI NL**

(71) Applicant: **ROSSIGNOLI Michele, ZUCCHER Rita, SOARDO Flavia, DE UFFICI Maria, dba ROSSIGNOLI Michele & C. Snc**
**Via Roma, 72/A**
**I-37068 Vigasio (Verona)(IT)**

(72) Inventor: **Falavegna, Walter**
**Via Zambonina 8**
**I-37068 Vigasio (Prov. Verona)(IT)**

(74) Representative: **Modiano, Guido et al**
**MODIANO & ASSOCIATI S.A.S. Via Meravigli, 16**
**I-20123 Milan(IT)**

(54) **Water pressure-controlled valve particularly for heating systems with sanitary-water production.**

(57) Water pressure-controlled valve for heating systems with warm sanitary water production comprising a valve body (1, 2) with inflow (3a) and outflow (3b) channels, mutually connected through a chamber (8) in which a cutoff membrane (7) for the passage between said input and output channels is movable in opposition to preloaded spring means (6), a stem (11) associated with the membrane to actuate microswitches (16, 16a) for switching electric circuits, and a separate duct 9 connected to the outflow channel (3b) and to said chamber (8). The outflow channel (3b) defines a Venturi tube and has means (19, 20) which are adapted to gradually vary the switch on flow-rates of the microswitches and are interposed between the chamber (8) and the Venturi tube (3b) so as to create differential pressures on the cutoff membrane (7) which are proportional to flow-rate values comprised between a preset minimum switch-on flow-rate for the microswitches and the maximum allowed flow-rate.

FIG. 3

# WATER PRESSURE-CONTROLLED VALVE PARTICULARLY FOR HEATING SYSTEMS WITH SANITARY-WATER PRODUCTION

The present invention relates to a water pressure-controlled valve such as a membrane flow-controlled switch, particularly adapted for use in heating systems equipped with an exchanger for producing (warm) sanitary water.

As is known, in heating systems which include a device such for example an exchanger for producing sanitary warm water as well as heating water, a special valve should be installed on the water supply duct for switching electric circuits adapted to turn on the warm-water production apparatus (burner or electric resistor) and simultaneously disconnecting the supply to the radiators of the heating system at a certain flow-rate.

In the systems currently in use, the flow-rates at which switching on of the apparatus for producing sanitary warm water is required are very rigid and very low (down to approximately 1.3-1.5 1/min) and the flow-rate differences required between switching on and off are also very low (0.2-0.3 1/min). In order to comply with these very specific requirements, highly sensitive hydraulic valves, with great manufacture precision and high reliability are therefore required, which however are not commercially available. Current hydraulic membrane valves do not allow precise adjustment of the switching flow-rates and are not capable of maintaining the pressure acting on the membrane always within acceptable limits.

The aim of the present invention is to provide a water pressure-controlled valve for heating systems equipped with an exchanger for producing sanitary warm water, conceived and structured so as to allow to vary the switching flow-rates of the warm-water producing system and therefore to customize, i.e. specialize, the system itself.

An object of the invention is to provide a water pressure-controlled valve capable of allowing high flow-rate increases even with a small increase in the differential pressure on the membrane.

A further object of the invention is to provide a valve of the above specified type which has high precision, sensitivity and reliability and is capable of keeping the pressure on the membrane constant within safety limits when the flow-rate exceeds preset allowed levels.

This aim, these objets and others which will become apparent hereinafter are achieved by a water pressure-controlled valve suitable for heating systems equipped with an apparatus for producing sanitary warm water, as defined in claim 1.

The features and advantages of the present invention will become apparent from the following description of some preferred but non-exclusive embodiments thereof, with reference to the accompanying drawings, given only by way of non-limitative example, wherein:

figure 1 is a front elevation view of a water pressure-controlled valve according to the invention;

figure 2 is a side view of the valve of figure 1;

figure 3 is a vertical middle sectional view taken along line A-A of figure 2, wherein the valve is in its closure position;

figure 4 is a middle vertical sectional view, taken along line B-B of figure 1, with the valve in its maximum opening position;

figure 5 is a side view of a flow-rate adjustment device used in the valve according to the invention;

figure 6 is a graph of the load losses for the valve illustrated in the preceding figures;

figure 7 is a front elevation view of a different embodiment of the water pressure-controlled valve according to the invention;

figure 8 is a side view of figure 7;

figure 9 is a top view of figure 7; and

figure 10 is a sectional view taken along line X-X of figure 7.

In the accompanying drawings, identical or similar parts or components have been indicated by the same reference numerals in the various figures.

With reference to the above figures, the valve or flow control device illustrated therein comprises a substantially T-shaped valve body formed by two parts or flanges 1 and 2 which can be mutually associated simply by placing them adjacent and can be mutually coupled for example by means of screws (not illustrated). A duct or axial cavity CA is provided in the lower flange 1, and threaded couplings 1a and 1b are provided at the ends of said cavity, respectively for the inflow and outflow of water. The axial cavity CA is divided into two portions 3a and 3b by a dividing partition 3 (figure 3). The portion 3a defines the water inflow channel and also accomodates a filter 4, while the opposite portion 3b, which defines the water outflow or discharge channel, has the shape of a Venturi tube. Proximate to the dividing partition 3, said Venturi tube 3b defines a transverse opening 5 which constitutes a main flow passage and can be closed and opened by means of a cylindrical or conical plug 6 rigidly associated with an elastically yielding membrane 7, made for example of pyrene-propylene rubber, which divides a chamber 8 into two compartments: an active or lower one and an upper or compensation one.

The membrane 7 is peripherally locked between the two flanges 1 and 2 and can move inside the chamber 8 from a lower position in which the opening 5 is closed by the plug 6 (figure 3) to an upper position of maximum opening (figure 4).

The chamber 8 is delimited between the upper flange 2 and the lower one 1 and is further hydraulically connected to the Venturi tube 3b by means of a lateral L-shaped channel 9. Said channel 9 ends on the opposite side of the membrane 7 with respect to the opening 5, i.e. it leads into the upper compartment of the chamber 8.

A plate 10 made of plastics or the like is associated with the membrane 7, and a control rod or stem 11 is rigidly associated centrally to said plate; said rod 11 is movably mounted inside a cylindrical hollow body 12 which centrally protrudes from the upper flange 2.

The stem 11 is guided within a cylindrical body or bush 13 made of self-lubricating material, such as polytetrafluoroethylene (teflon), which besides ensuring reduced friction keeps the stem 11 free from encrustations. Coaxially to said stem 11, between the bush 13 and the hollow body 12, a cylindrical spiral spring 14 is arranged which abuts upwardly against an upper flange of the bush resting against a single sealing ring 14a (O-ring), also made of teflon or the like, and downwardly against the plate 10. A metallic support or bracket 15, curved in the shape of an inverted U, is fixed outside and astride the hollow body 12; two microswitches 16-16a are coupled to its outer wings and are protected by insulating material; said microswitches are intended to actuate the electric circuits controlling the sanitary warm water production apparatus and the heating system.

A transverse strip or a frustum-like head 17 is fixed, for example in a snap manner, to the free end of the stem 11, and is adapted to act on and operate, upon a translatory motion of the stem 11, the activation buttons 16b and 16c of said two microswitches.

The cylinder or plug 6 for interrupting the main opening 5 may be rigidly associated with the membrane, inside the valve, by snap coupling with a central stud 18 which protrudes from said membrane.

In order to prevent the membrane from being subject to high pressures and therefore to considerable stresses which are harmful to its mechanical resistance characteristics and reduce its life, a duct 20 (figure 3) is furthermore provided between said chamber 8 (lower compartment) and the Venturi tube, i.e. on the opposite side of the membrane 7 with respect to the channel 9; said duct 20 has a specific inclination with respect to the horizontal, i.e. with respect to the axis of the cavity CA. It has been experimentally found that the angle of inclination of said duct which ensures the best results is approximately 15°, while its diameter is advantageously equal to approximately half the diameter of the intermediate widened portion of the lateral channel 9.

In order to allow to vary the switch on flow-rates of the microswitches starting from an adjustable minimim value, the pressure difference ahead of and after the Venturi outlet tube is employed. More in particular, a vertical duct 19 connects the Venturi outflow tube to the active compartment of the chamber 8 to which the duct 20 leads, i.e. below the membrane. The passage of the duct 19 is adjustable, for example by appropriately varying its cross-section or by providing for example an externally controllable needle adjustment (not illustrated).

Finally, a flow-rate adjuster 21 is inserted at the end of the channel inflow portion 1a, transversely thereto, after the filter 4, and consists of a small cylinder 21a (figure 5) milled so as to have a circular sector 21b which, after being inserted in the inlet portion 3a and being rotated inside said duct (for example by means of a screwdriver acting on the outwardly protruding notched pivot 21c), is capable of gradually obstructing the passage 3c which connects the inflow duct 3a to the chamber 8.

The operation of the above described flow-controlled device or valve is explained hereafter, assuming that the coupling 1a is connected to the urban water distribution network and that a cock or cutoff valve (not illustrated) is installed on the connection 1b after the Venturi tube. When the cock is completely closed, the pressure between the lower and the upper compartments of the chamber 8 (figure 3) stabilizes by vitue of the channel 9, and the plug 6 thus closes the main passage 5 between the Venturi tube and the chamber 8 by virtue of the thrust generated on the plate 10 by the spring 14. In this configuration, the valve is in its closure or idle position, i.e. the head 17 keeps the contacts 16b and 16c of the microswitches pressed; said microswitches thus close an electric circuit adapted to operate the heating system (figures 2 and 3).

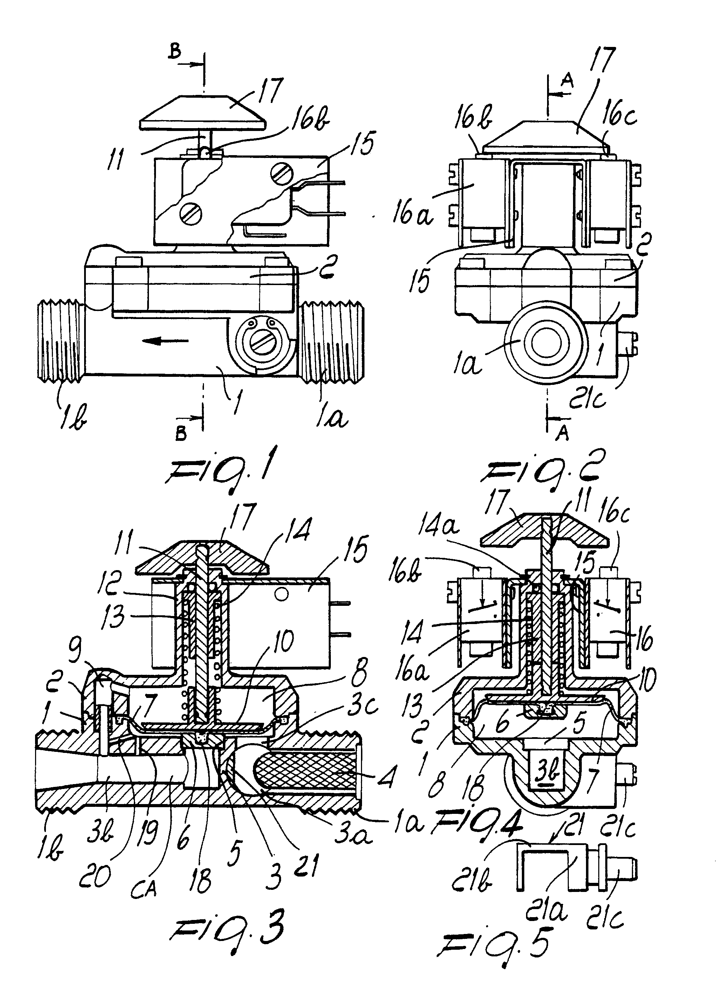

If said cock is gradually opened, i.e. if the flow-rate is gradually increased, the differential pressure on the membrane 7 proportionally increases by virtue of the fact that the water, entering through the opening 3c, flows below the membrane and enters the outflow duct 1b only through the channels 19 and 20, since at this stage the total flow-rate is not sufficient to open the main passage 5. The valve therefore remains in its idle position, i.e. closed, until a preset differential pressure, for example 0.28 bar, is reached; the flow-rate corresponding to this differential pressure value is to be considered as the minimum flow-rate for the microswitches to turn off and is adjustable, as previously indicated, by varying the cross section of the duct 19. If the flow-rate is increased for example by 0.2 1/min, the differential pressure on the membrane increases until it reaches 0.3 bar. This value has been selected as a sufficient value for overcoming the force of the spring 14 and therefore lifting the plug 6 which, besides freeing the main passage 5, also raises, by means of the stem 11, the microswitch-pusher head 17 which thus frees the pushbutton contacts 16b and 16c of the microswitches (figures 1 and 4). The contacts thus released close the electric circuit which activates the sanitary warm water production apparatus, causing it to start operation, while the heating apparatus is simultaneously disconnected. Since the membrane must have a limited thickness in order to have sufficient sensitivity, it cannot withstand great loads. In order to avoid possible damage to the membrane, the inclined channel 20 has been provided, as mentioned; as the operating pressure rises, said channel initially causes a certain disturbance in the channel 9 and then pressurizes it, thus stabilizing the pressure within levels which can be withstood by the membrane.

By then varying the angle of rotation of the flow-rate adjuster 21 with a screwdriver or the like it is possible to preset supply water flow-rates compatible with those for which the sanitary warm water production apparata were designed. Said adjuster causes no excessive noise even with considerable throttling and very high flow speeds.

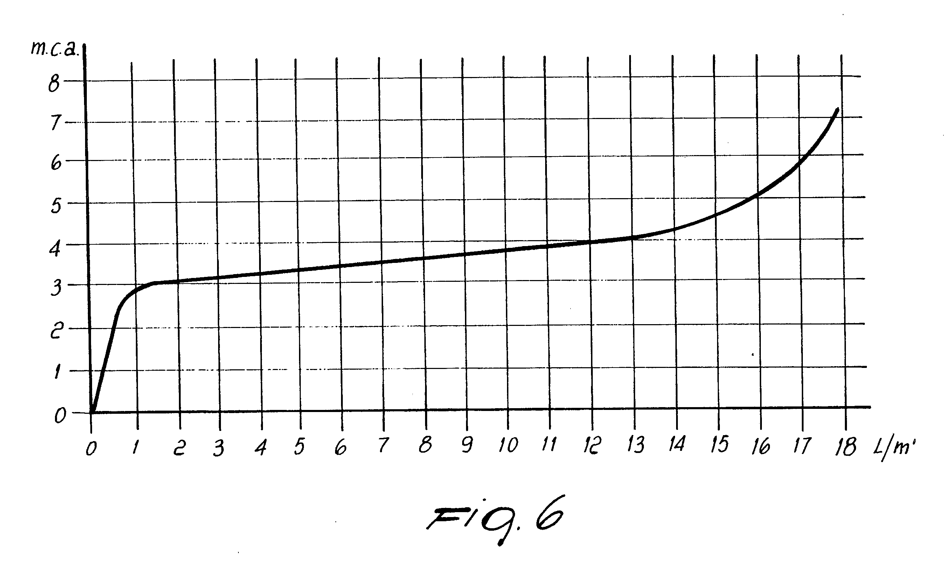

Figure 6 illustrates the plot of the load losses for the above described water pressure-controlled valve. From said plot it can be easily seen that if the differential pressure on the membrane increases by one unit (m.c.a.), the flow-rate rises from 1.5 1/min to 12 1/min, which have never been obtainable with known flow switch devices.

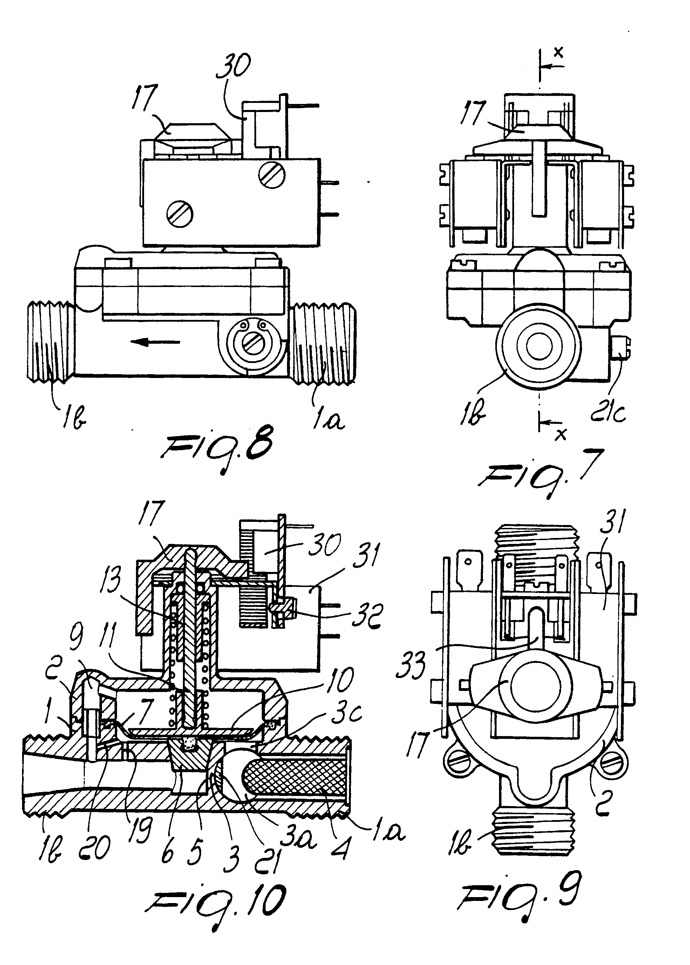

Figures 7 to 10 illustrate a variated embodiment of the valve illustrated in figures 1 to 5, in which the head 17, instead or besides of actuating microswitch contacts, may actuate a potentiometer 30 adapted to vary the supply voltage of a modulator of a gas valve for fuel fed systems.

The potentiometer 30 (comprising an electric resistor coiled on an insulating material) is carried on a metallic support 31 fixed to the hollow body 12. A slider 32, supported by a tab 33 of the head 17, may slide on the resistor; said head is fixed to the stem 11 and to the plate 10, so that as the flow-rates vary, the slider 32 is caused to slide proportionally on the electric resistor, with consequent voltage variations across the potentiometer. Such voltage variations may be applied to the input of a modulation device for a gas feed valve which ensures that the supply of the gas to the burner and therefore the instantaneous modulation of the flame are substantially proportional to the demand of warm water (flow-rate at the output from the water pressure-controlled valve).

In its practical embodiment, the invention as described above is naturally susceptible to structural and functional modifications and variations without abadoning the scope of the protection of the invention defined by the content of the claims defined hereafter.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A water pressure-controlled valve particularly for a heating system with sanitary water production, which comprises a valve body (1, 2) which defines, in its interior, a membrane chamber (8), a flexible and deformable membrane (7) arranged in said chamber so as to divide it into an active compartment and a compensation compartment, a feed duct (3a) for said active compartment, a Venturi discharge duct (3b) for said active compartment, a movable shutter (6) actuatable by said membrane (7) and adapted to open and close said discharge duct (3b), elastic loading means (14) for said membrane adapted to actuate the shutter (6) towards its closure position, a control rod (11) actuated by said membrane and protruding from one of the compartments to actuate heating system control means (16, 16a, 30), and a channel (9) provided in the valve body and intended to connect the compensation compartment to the Venturi duct, characterized by at least one calibrated hole (19, 20) which connects the active compartment to said Venturi discharge duct (3b), so as to determine on said membrane differential pressures which are proportional to flow-rate values comprised between a preset minimum and maximum flow-rates.

2. A valve according to claim 1, characterized by a first calibrated hole (19) which extends between said active compartment and said Venturi discharge duct (3b) and leads into the Venturi discharge duct downstream to said channel (9), and a second calibrated hole (2) which extends between said active compartment and said channel (9) to stabilize the pressure on the membrane (7) within levels tolerable thereby.

3. A valve according to claim 2, characterized in that said first calibrated hole (19) has means for gradually varying its own passage cross section.

4. A valve according to claim 2, characterized in that said second calibrated hole (20) is straight and is inclined with respect to said Venturi discharge duct (3b) by approximately 10-20° and in that its passage cross section is equal to approximately half that of said channel (9).

5. A valve according to claim 1, characterized by a bush (13) made of self-lubricating material, inside which said control rod (11) is slidably mounted, and a single sealing gasket (14a) arranged between said valve body (1, 2), said bush (13) and said control rod (11).

6. A valve according to claim 1, characterized by a flow adjustment device (21) arranged in said feed duct (3a) and having a valve element which can be controlled from outside for controlled inflow cutoff.

7. A valve according to claim 1, characterized in that said control means (30) actuated by said control rod (11) comprise a potentiometer the movable part (32) whereof is kinematically connected to said control rod.

Fig.1

Fig.2

Fig.3

Fig.4

Fig.5

Fig. 6

EP 0 382 179 A2

Fig.8

Fig.7

Fig.10

Fig.9